**Europäisches Patentamt**

**European Patent Office**

**Office européen des brevets**

(19)

(11) Veröffentlichungsnummer: **0 011 796**
**B1**

(12) **EUROPÄISCHE PATENTSCHRIFT**

(45) Veröffentlichungstag der Patentschrift: **15.12.82**

(21) Anmeldenummer: **79104571.9**

(22) Anmeldetag: **19.11.79**

(51) Int. Cl.³: **H 01 G 4/20,** H 01 B 3/44, C 08 J 5/18, B 32 B 27/32, B 29 D 7/22

(54) **Einseitig metallisierte biaxial gestreckte Polypropylenfolie zur Verwendung als Elektroisolierfolie.**

(30) Priorität: **29.11.78 DE 2851557**

(43) Veröffentlichungstag der Anmeldung:
**11.06.80 Patentblatt 80/12**

(45) Bekanntmachung des Hinweises auf die Patenterteilung:
**15.12.82 Patentblatt 82/50**

(84) Benannte Vertragsstaaten:
**DE FR GB**

(56) Entgegenhaltungen:
DE - A - 1 802 327
DE - A - 2 601 810
DE - A - 2 722 087
FR - A - 2 004 492
FR - A - 2 098 190
FR - A - 2 212 625
FR - A - 2 254 430
US - A - 3 380 868

(73) Patentinhaber: **HOECHST AKTIENGESELLSCHAFT**
**Postfach 80 03 20**
**D-6230 Frankfurt/Main 80 (DE)**

(72) Erfinder: **Seifried, Walter, Dr.**
**Am Güldenplan 9**
**D-6200 Wiesbaden 1 (DE)**
Erfinder: **Janocha, Siegfried, Dr.**
**Am Hohen Stein 6**
**D-6200 Wiesbaden (DE)**
Erfinder: **Crass, Günter**
**Bachstrasse 7**
**D-6204 Taunusstein 4 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Einseitig metallisierte biaxial gestreckte Polypropylenfolie zur Verwendung als Elektroisolierfolie

Die vorliegende Erfindung betrifft eine aus zwei Lagen bestehende biaxial gestreckte Polypropylenfolie, bei der ein Oberfläche rauher ist als die andere Oberfläche. In metallisierter Form wird die Folie zur Herstellung von Kondensatoren verwendet.

Neben der Verwendung von siegelfähigen Polypropylenfolien im Verpackungssektor (DE—B—16 94 547) werden biaxial gestreckte Polypropylenfolien auch für elektrische Anwendungen, z.B. in metallisierter Form, bei der Herstellung von Kondensatoren eingesetzt.

Ein weithin bekanntes Problem bei der Weiterverarbeitung von glatten Polypropylenfolien besteht darin, daß die Folien, z.B. beim Metallisieren, Schneiden und Wickeln zum Blocken neigen.

Insbesondere bei der Weiterverarbeitung an den schnell-laufendenden Kondensatorwickelmaschinen können diese Folien nicht eingesetzt werden.

Um diesem Problem zu begegnen, stellt man deshalb Polypropylenfolien mit rauhen Oberflächen her, die sich gut weiterverarbeiten lassen.

So ist aus der DE—A—27 40 237 ein Verfahren zur Herstellung einer Polypropylenfolie mit rauhen Oberflächen bekannt, bei dem man die Rauhigkeit durch Einstellung bestimmter Kristallisationstemperaturen und Abkühlungszeitspannen erzielt.

In der DE—A—25 53 693 ist ein Verfahren zur Herstellung von rauhen Polypropylenfolien beschrieben, bei dem durch das Einhalten bestimmter Strecktemperaturen und -verhältnisse eine fibrillenartige Netzstruktur auf der Oberfläche aufgebaut wird. Diese Netzwerkstruktur dient dem Zweck, daß bei der Herstellung von Kondensatoren die dabei eingesetzten Isolieröle besser aufgesaugt werden. Ein ähnliches Verfahren zur Herstellung von rauhen Elektroisolierfolien ist aus der DE—A—27 22 087 bekannt. Auch hier werden durch spezielle Streckbedingungen und -temperaturen in der Oberfläche Kristalle der $\beta$-Form mit einem mittleren Durchmesser von mehr als 7 $\mu$m erzeugt, wobei die Verteilungsdichte der Kristalle größer als 5 000 Kristalle/cm² (bei Sphärolithen) bzw. größer als 1 000 Kristalle/cm² (bei stabförmigen Kristallen) betragen muß. Die Aufrauhung der Oberfläche dient ebenfalls zur Erhöhung der Aufsaugfähigkeit für isolierende Öle, wodurch Störungen bzw. Ausfall infolge Koronaentladungen im Kondensator vermieden werden.

Auch die DE—A—26 01 810 beschäftigt sich mit der Verbesserung der Imprägnierung von Kondensatorwickel, wobei man durch eine bestimmte Temperaturführung bei der Herstellung von Schlauchfolien diese aufrauht, d.h. es werden Sphärolithe der Typ III Kristallstruktur erzeugt. Den genannten Verfahren haftet jedoch wegen der steilen Charakteristik der Kristallisationskinetik der gemeinsame Mangel an, daß das Einhalten gaz spezieller Verfahrensbedingungen technisch recht aufwendig und durch äußere Einflüsse, z.B. durch Luftkonvektion, sehr störanfällig ist. Außerdem sind die nach den Verfahren hergestellten Folien lediglich auf die Saugwirkung für isolierende Öle, weniger jedoch auf die elektrischen Eigenschaften der Folien ausgelegt.

Es ist nämlich bekannt, daß die elektrischen Eigenschaften von biaxial gestreckten Polypropylenfolien stark von der Oberflächenstruktur abhängen. Die idealen elektrischen Eigenschaften werden einerseits bei Polypropylenfolien mit sehr glatten und planparallelen Oberflächen beobachtet, wobei jedoch das eingangs geschilderte Problem des Blockens bei der Weiterverarbeitung auftritt.

Andererseits nehmen die guten elektrischen Eigenschaften von Polypropylenfolien mit der Steigerung der Rauhigkeit der Oberfläche ab. Vor allem der sogenannte Lebensdauertest, d.h. der Kapazitätsverlust eines Kondensators als Funktion der Zeit [$\Delta$ C/C = f(t)] zeigt eine eindeutige Abhängigkeit von der Oberflächenrauhigkeit.

Außerdem resultiert bei Bedampfung der Polypropylenfolien mit rauher Oberfläche eine inkonstante Schichtdicke, da an den Flanken die Metallschicht dünner ist. Dadurch tritt im Kondensator verstärkt eine sogenannte Metallablösung auf, die eine Kapazitätsabnahme oder den Ausfall des Kondensators zur Folge hat.

Es stellte sich somit die Aufgabe, eine biaxial gestreckte Polypropylenfolie zu schaffen, die einerseits gute elektrische Eigenschaften und Dauertestwerte aufweist und die andererseits bei der Weiterverarbeitung nicht blockt und somit auch auf schnellaufenden Kondensatorwickelmaschinen eingesetzt werden kann.

Gelöst wird die vorstehend genannte Aufgabe durch eine einseitig metallisierte biaxial gestreckte Polypropylenfolie zur Verwendung als Elektroisolierfolie, deren kennzeichnendes Merkmal darin besteht, daß sie aus zwei Schichten unterschiedlicher Zusammensetzung besteht und die metallisierte Oberfläche eine Rauhtiefe $R_z$ von höchstens 0,15 $\mu$m und die andere Oberfläche eine Rauhtiefe $R_z$ zwischen 0,2 $\mu$m und 0,4 $\mu$m aufweist, deren E-Modul in allen Richtungen der Folienebene > 2 000 N/mm² beträgt und die eine Gleichspannungsfestigkeit > 650 V/$\mu$ besitzt.

Unter der Rauhtiefe $R_z$ ist das arithmetische Mittel aus 5 $R_t$-Messungen zu verstehen, wobei $R_t$ den Wert zwischen dem höchsten Maximum und dem niedrigsten Minimum innerhalb der Meßstrecke (10 mm) angibt.

Bevorzugt in Rahmen der Erfindung sind solche Folien, bei denen die Schicht mit der glatten Oberfläche mehr als 50% des Gesamtdicke des Verbundes ausmacht. Als Polymere für die Schicht mit der rauheren Oberfläche werden insbesondere Blockcopolymere oder Polymerengemische verwendet. Vor allem haben sich Blockcopolymere aus 80 bis 99 Gewichtsprozent Propylen und 20 bis 1 Gewichtsprozent Styrol, Methylmethacrylat oder Äthylen oder Polymergemische aus 80 bis 99 Gewichtsprozent Polypropylen und 20 bis 1 Gewichtsprozent Polystyrol, Polymethylmethacrylat oder Niederdruck- oder Hochdruckpolyäthylen in der Praxis besonders bewährt.

Insbesondere werden Polypropylene eingesetzt, die einen relativ niedrigen Aschegehalt, vorzugsweise unter 100 ppm, aufweisen und die frei von anorganischen oder organischen Gleitmitteln sind und keine ionogenen Bestandteile enthalten.

Die Verbundfolien können nach einem der bekannten Verfahren durch Schmelzbeschichtung oder Coextrusion und anschließende biaxiale Streckung hergestellt werden, wie sie zur Herstellung biaxial gestreckter Polypropylenfolien angewendet werden.

Zur Verwendung als Kondensatorfolien werden die Folien auf der glatteren Seite metallisiert, wobei als Metall vorzugsweise Aluminium verwendet wird. Die Stärke der Metallischicht liegt üblicherweise im Bereich von 20 nm bis 50 nm, entsprechend 1 bis 5 $\Omega/\square$.

Es hat sich überraschenderweise gezeigt, daß die elektrischen Werte gegenüber einer als ideal anzusehenden glatten Polypropylenfolie nicht verändert (Dielektrizitätszahl in Abhängigkeit von der Temperatur) bzw. noch verbessert waren (spezifischer Durchgangswiderstand und dielektrischer Verlustfaktor, beide in Abhängigkeit von der Temperatur), obwohl gerade das Gegenteil entsprechend den eingangs gegebenen Erläuterungen hätte erwartet werden müssen.

Während z.B. auch bei reinen Polypropylenfolien bereits bei etwa 70°C ein starker Abfall des spezifischen Durchgangswiderstandes auftrat, war ein solcher Abfall bei den erfindungsgemäßen Folien erst bei etwa 100°C zu beobachten.

Die Erfindung wird anhand der folgenden Beispiele nochmals näher erläutert, ohne daß jedoch eine Einschränkung hierauf bestehen soll.

Es wurden durch Coextrusion (Beispiel 1 und 2) bzw. Schemelzbeschichtung (Beispiel 3) Verbundfolien hergestellt, die anschließend biaxial verstreckt und thermofixiert wurden. Die Gesamtdicke betrug 12 $\mu$m. Die dickere Schicht (8 $\mu$m) mit der glatteren Oberfläche bestand aus Polypropylen, das einen Aschegehalt von unter 100 ppm aufwies. Die Schicht mit der rauheren Oberfläche bestand aus Polypropylen mit 3,6 und 9% Hochdruckpolyäthylen. In der Tabelle 1 sind die entsprechenden Meßwerte aufgeführt.

TABELLE 1

| | Beispiel 1 | Beispiel 2 | Beispiel 3 |
|---|---|---|---|
| Polyäthylenanteil (Gew.%) | 3,0 | 6,0 | 9,0 |
| Reißfestigkeit (N/mm²) | | | |
| längs | 210 | 200 | 200 |
| quer | 350 | 360 | 360 |
| E-Modul (N/mm²) | | | |
| längs | 2 850 | 2 850 | 2 950 |
| quer | 6 000 | 5 350 | 5 350 |
| $R_z$ ($\mu$m) | | | |
| glatte Seite | 0,120 | 0,120 | 0,120 |
| rauhe Seite | 0,280 | 0,300 | 0,350 |
| spez. Durchgangswiderstand ($\Omega \times$ cm) | | | |
| 25°C | $4 \times 10^{19}$ | $4 \times 10^{19}$ | $3,5 \times 10^{19}$ |
| 100°C | $4 \times 10^{19}$ | $3,6 \times 10^{19}$ | $3,2 \times 10^{19}$ |

Im Vergleich wurden die Werte für den spezifischen Durchgangswiderstand an einer normalen

glatten ($R_z = 0,120$ $\mu$m) Polypropylenfolie gemessen. Der Durchgangswiderstand betrug bei 25°C $3 \times 10^{19}$ und fiel bei 100°C auf $7 \times 10^{17}$ ab.

Die erfindungsgemäßen Folien wurden auf der glatten Seite mit Aluminium bedampft, wobei die Schichtstärke 25 nm betrug.

Aus den bedampften Folien wurden Kondensatoren von 15 $\mu$F gewickelt, die sich in einem aluminiumbecher befanden und mit Harz vergossen wurden. An den so hergestellten Kondensatoren wurden Kapazitätsmessungen bei 85°C mit einer Kapazitätsmeßbrücke (nach Schering) bei 50 Hz durchgeführt. Die Kondensatoren blieben 500 Stunden unter Spannung bei 365 V. Danach wurde der Kapazitätsverlust ($\Delta$ C/C) in Prozenten ermittelt. Die Werte sind in der folgenden Tabelle 2 aufgeführt.

TABELLE 2

| Kondensatoren, hergestellt aus biaxial gestreckten Polypropylenfolien | | $\Delta$ C/C nach 500 Std. | Gleichspannungs- festigkeit (V/$\mu$m) |
|---|---|---|---|
| 1 glatte Folie $R_z = 0,110$ $\mu$m | Ver- gleichs- beispiele | 1,8% | 730 |
| 2 rauche Folie nach DE—A—27 40 237 | | 4,2% | 700 |
| 3 erfindungsgemäß Beispiel 1 | | 2,5% | 690 |

Wie aus der Tabelle deutlich abzulesen ist, besitzen die aus den erfindungsgemäßen Folien hergestellten Kondensatoren eine gute Gleichspannungsfestigkeit und der Kapazitätsverlust ist wesentlich geringer als bei den aus den bekannten rauhen Folien hergestellten Kondensatoren.

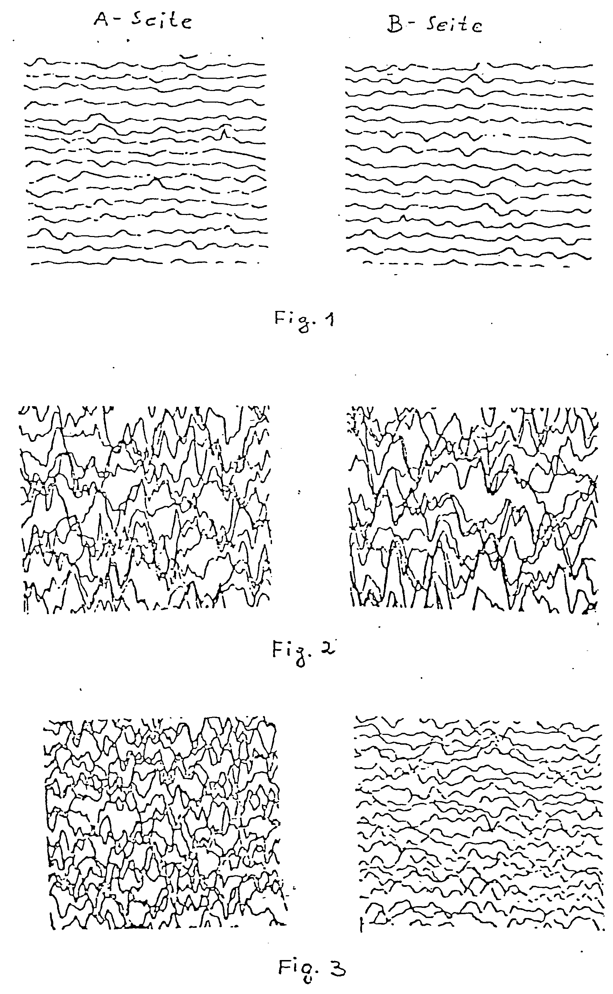

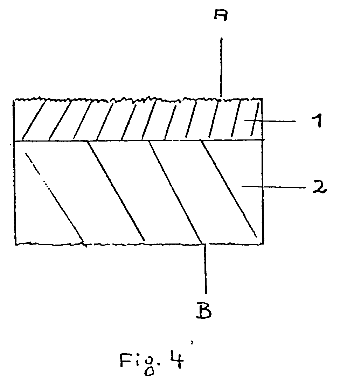

Die Rauhigkeitsunterschiede der in Tabelle 2 genannten drei Beispiele sind aus den Figuren 1 bis 3 gut zu erkennen. Die Schriebe wurden mit einem Gould Topographen aufgenommen.

Figur 4 zeigt in Seitenansicht schematisch die Rauhigkeitsunterschiede der beiden Folienschichten, wobei Schicht 1 die modifizierte und Schicht 2 die reine Polypropylenschicht darstellt.

Die A-Seite der erfindungsgemäßen Folie ist deutlich rauher, während bei den Vergleichsbeispielen zwischen A- und B-Seite keine oder nur geringfügige Unterschiede bestehen.

**Patentansprüche**

1. Einseitig metallisierte biaxial gestreckte Polypropylenfolie zur Verwendung als Elektroisolierfolie, dadurch gekennzeichnet, daß sie aus zwei Schichten unterschiedlicher Zusammensetzung besteht und die metallisierte Oberfläche eine Rauhtiefe $R_z$ von höchstens 0,15 $\mu$m und die andere Oberfläche eine Rauhtiefe $R_z$ zwischen 0,2 $\mu$m und 0,4 $\mu$m aufweist, deren E-Modul in allen Richtungen der Folienebene > 2 000 N/mm$^2$ beträgt und die eine Gleichspannungsfestigkeit von > 650 V/$\mu$m besitzt.

2. Folie nach Anspruch 1, dadurch gekennzeichnet, daß die Schicht mit der glatteren Oberfläche mehr als 50% der Gesamtdicke der Verbundfolie ausmacht.

3. Folie nach einem der Ansprüche 1 oder 2, dadurch gekennzeichnet, daß die Schicht mit der rauheren Oberfläche aus einem Blockcopolymeren besteht.

4. Folie nach einem der Ansprüche 1 oder 2, dadurch gekennzeichnet, daß die Schicht mit der rauheren Oberfläche aus einem Polymerengemisch besteht.

5. Folie nach Anspruch 4, dadurch gekennzeichnet, daß das Polymerengemisch zu 80 bis 99 Gewichtsprozent aus Polypropylen und 20 bis 1 Gewichtsprozent aus Polystyrol, Polymethylmethacrylat oder Niederdruck- oder Hochdruckpolyäthylen besteht.

6. Folie nach Anspruch 3, dadurch gekennzeichnet, daß das Blockcopolymere aus 80 bis 99 Gewichtsprozent Propylen und 20 bis 1 Gewwichtsprozent Styrol, Methylmethacrylat oder Äthylen gebildet ist.

7. Folie nach einem der Ansprüche 1 bis 6, dadurch gekennzeichnet, daß die Metallschicht eine Stärke von 20 nm bis 50 nm, entsprechend 1 bis 5 $\Omega$/$\Box$ aufweist.

8. Verwendung einer Folie nach einem der Ansprüche 1 bis 7 in einem Kondensator.

**Revendications**

1. Feuille de polypropylène biaxialement étirée unilatéralement métallisée pouvant être utilisée comme feuille électro-isolante, caractérisée en ce qu'elle comprend deux couches de compositions différentes, la surface métallisée présentant une profondeur de rugosité $R_z$ d'au maximum 0,15 $\mu$m et l'autre surface une profondeur de rugosité $R_z$ comprise entre 0,2 et 0,4 $\mu$m, en ce que son coefficient d'élasticité est supérieur à 2000 N/mm² dans toutes les directions du plan de la feuille et en ce qu'elle présente une résistance à la tension continue supérieure à 650 V/$\mu$m.

2. Feuille selon la revendication 1 caractérisée en ce que la couche ayant la surface la plus lisse constitue une proportion supérieure à 50% de l'épaisseur totale de la feuille.

3. Feuille selon l'une des revendications 1 ou 2 caractérisée en ce que la couche ayant la surface la plus rugeuse est un copolymer séquencé.

4. Feuille selon l'une des revendications 1 ou 2, caractérisée en ce que la couche ayant la surface la plus rugueuse est un mélange de polymères.

5. Feuille selon la revendication 4 caractérisée en ce que le melange de polymères comprend entre 80 et 99% en poids de polypropylène et entre 20 et 1% en poids de polystyrène, de polymethacrylate de méthyle ou de polyéthylene basse ou haute pression.

6. Feuille selon la revendication 3 caractérisée en ce que le copolymère séquencé comprend entre 80 et 99% en poids de propylène et entre 20 et 1% en poids de styrène, de méthyacrylate de méthyle ou d'éthylène.

7. Feuille selon l'une des revendications 1 à 6 caractérisée en ce que la couche métallique a une épaisseur comprise entre 20 nm et 50 nm, correspondant à entre 1 et 5 $\Omega/\square$.

8. Utilisation d'une feuille selon l'une des revendications 1 à 7 dans un condensateur.

**Claims**

1. Biaxially stretched polypropylene film which is metallized on one side and is suitable for use as an electrical insulating film, characterised in that it comprises two layers of different compositions and that the metallized surface has a roughness height $R_z$ of not more than 0.15 $\mu$m and the other surface has a roughness height $R_z$ ranging between 0.2 $\mu$m and 0.4 $\mu$m, the film having a modulus of elasticity which is greater than 2000 N/mm² in all directions of the plane of the film and a DC dielectric strength which is greater than 650 V/$\mu$m.

2. A film according to claim 1, wherein the layer with the smoother surface comprises more than 50% of the total thickness of the composite film.

3. A film according to claim 1 or claim 2, wherein the layer with the rougher surface comprises a block copolymer.

4. A film according to claim 1 or claim 2, wherein the layer with the rougher surface comprises a polymer mixture.

5. A film according to claim 4, wherein the polymer mixture comprises from 80 to 99 percent by weight of polypropylene and from 20 to 1 percent by weight of polystyrene, polymethyl methacrylate or high density or low density polyethylene.

6. A film according to claim 3, wherein the block copolymer comprises from 80 to 99 percent by weight of propylene and from 20 to 1 percent by weight of styrene, methyl methacrylate or ethylene.

7. A film according to any of claims 1 to 6, wherein the metal layer has a thickness ranging from 20 nm to 50 nm, corresponding to 1 to 5 $\Omega/\square$.

8. Use of a film according to any of claims 1 to 7 in a capacitor.

**0011 796**

A- Seite     B- Seite

Fig. 1

Fig. 2

Fig. 3

Fig. 4